# FASCICULE DE BREVET EUROPEEN

(11) **EP 1 541 384 B1**
(45) Date de publication et mention de la délivrance du brevet: **13.06.2018**
(21) Numéro de dépôt: 04291882.1
(22) Date de dépôt: 23.07.2004
(51) Int. Cl.: B60C 17/06, B60C 15/028

(54) **Dispositif de roulage à plat pour véhicule automobile et ensemble monté l'incorporant**
Notlaufstützring für Fahrzeug und montierte Einheit mit diesem Ring
Runflat supporting ring for vehicle and tire/wheel assembly including it

(30) Priorité: 08.12.2003 FR 0314356
(43) Date de publication de la demande: 15.06.2005
(60) Demande divisionnaire: 08075616.6
(73) Titulaire: HUTCHINSON, 75008 Paris (FR)
(72) Inventeur: Resare, Lars Johan, Trenton, NJ 08618 (US); Marsaly, Olivier, Washington Crossing, PA 18977 (US); Heuze, Olivier, 95290 L'Isle Adam (FR)
(74) Mandataire: Gevers & Orès

(56) Documents cités:
- EP-A- 0 569 710
- DE-A1- 3 809 422
- DE-A1- 3 818 648
- US-A- 3 394 749
- US-A- 3 509 928
- US-A- 3 682 218
- US-A- 4 173 243
- PATENT ABSTRACTS OF JAPAN vol. 003, no. 084 (M-066), 20 juillet 1979 (1979-07-20) & JP 54 059702 A (YOKOHAMA RUBBER CO LTD:THE), 14 mai 1979 (1979-05-14)
- PATENT ABSTRACTS OF JAPAN vol. 1995, no. 03, 28 avril 1995 (1995-04-28) & JP 06 344733 A (YOKOHAMA RUBBER CO LTD:THE), 20 décembre 1994 (1994-12-20)

## Description

La présente invention concerne un dispositif de roulage à plat destiné à équiper un ensemble monté sans chambre à air pour véhicule automobile et un tel ensemble monté incorporant ce dispositif, permettant de parcourir une distance importante à vitesse relativement élevée lorsque l'ensemble monté est partiellement ou totalement dégonflé. Ce dispositif de roulage à plat est notamment utilisable pour équiper un véhicule militaire destiné à évoluer sur tous types de sols incluant des sols sablonneux.

Les dispositifs de roulage à plat connus sont généralement constitués par un anneau de soutien qui est monté avec jeu autour d'une jante de roue à l'intérieur d'une enveloppe de pneumatique. Cet anneau, constitué d'une matière souple, est d'un seul tenant et il exerce du fait de sa largeur à sa base un effort de plaquage de l'enveloppe sur la jante. On utilise parfois des dispositifs rigides en plusieurs pièces ou secteurs qui sont fixés deux à deux.

Le document de brevet JP-A-03 231007 présente un dispositif de roulage à plat destiné à être monté autour d'une jante de roue de type à plusieurs blocs, comprenant :
- un anneau métallique divisé en une pluralité de secteurs en arc de cercle connectés deux à deux entre eux et de section axiale en forme de « I », dont chacun des sommets est destiné à soutenir une enveloppe de pneumatique en roulage à plat, et dont chacune des bases a ses bords latéraux emprisonnés dans un élément d'ancrage métallique également en arc de cercle, et
- une semelle annulaire de caoutchouc qui comporte un creux circonférentiel dont les rebords latéraux enserrent ledit élément d'ancrage et qui est destinée à être montée sur la jante contre les talons de l'enveloppe, de sorte à caler ces talons contre les rebords de la jante.

Un inconvénient majeur de ce dispositif de roulage à plat réside dans sa masse relativement élevée, ce qui a pour effet d'alourdir les ensembles montés l'incorporant et, par conséquent, les véhicules équipés de ces ensembles montés. Cet alourdissement global pénalise en particulier le coût de transport des véhicules aéroportés.

Les documents JP-A-54 059702, US-A-4 173 243, DE-A-38 18 648, JP-A-06 344733, US-A-3 394 749, EP-A-0 569 710, US-A-3 682 218, US-A-3 509 928 et FR-A-2 005 856 présentent également des dispositifs de roulage à plat de type à anneau de soutien monté autour d'une jante pour soutenir une enveloppe de pneumatique en roulage à plat.

Notamment, le document US-A-4 173 243 enseigne d'utiliser des secteurs d'anneau pleins en forme de « I » connectés entre eux et équipés de deux cales annulaires pour bloquer les talons de l'enveloppe contre les rebords de jante, ces cales reliant une semelle de support de l'anneau à ces talons. Le document EP-A-0 569 710 divulgue également des secteurs d'anneau creux connectés entre eux et équipés de bagues plates reliant l'anneau aux talons de l'enveloppe pour les caler contre les rebords de jante. Et le document FR-A-2 005 856 enseigne d'utiliser des secteurs d'anneaux connectés entre eux par des entretoises transversales espacées, ces entretoises étant chacune vissées sur une jante monobloc en s'étendant transversalement entre deux secteurs adjacents de sorte à caler les talons de l'enveloppe contre les rebords de jante.

Un but de la présente invention est de proposer un dispositif de roulage à plat destiné à équiper un ensemble monté comprenant une jante de roue à plusieurs blocs et une enveloppe de pneumatique comportant des talons montés contre des rebords de ladite jante, ledit dispositif comprenant :
- un anneau de soutien qui est destiné à être monté autour de ladite jante et qui est divisé en au moins deux secteurs d'anneau chacun en forme d'arc de cercle, chaque secteur d'anneau comportant une paroi rigide qui délimite au moins un volume interne et qui définit les faces latérales dudit secteur,
- des moyens de blocage desdits talons contre lesdits rebords qui relient lesdits secteurs d'anneau auxdits talons en vue d'assurer la motricité de l'ensemble monté en cas de pression réduite à l'intérieur de ce dernier,
qui remédie à l'inconvénient précité en présentant notamment une masse réduite en comparaison de celle des dispositifs de roulage à plat connus pour de telles jantes de roue, tout en conférant à l'ensemble monté une motricité identique en roulage à plat sur tous types de sols. Ce but est atteint grâce au dispositif selon la revendication 1. Il en résulte notamment un allègement significatif des ensembles montés et des véhicules incorporant ces dispositifs de roulage à plat, par exemple des véhicules militaires blindés et, par conséquent, une réduction notable du coût de transport de ces véhicules.

Selon un exemple de réalisation de l'invention, ladite paroi rigide peut délimiter au moins deux volumes internes séparés deux à deux entre eux par une cloison, ledit volume interne et ladite ou chaque cloison s'étendant dans la direction circonférentielle de chaque secteur d'anneau.

On notera que cette architecture d'anneau pourvu d'une ou de plusieurs cloison(s) en forme de secteur de circonférence permet d'améliorer la résistance à la compression du dispositif de roulage à plat selon l'invention, en roulage à plat ou à pression de gonflage réduite.

Lesdits secteurs d'anneau sont ainsi indépendants les uns des autres (i.e. ils ne sont pas connectés entre eux).

Selon une autre caractéristique de l'invention, lesdits moyens de blocage sont avantageusement destinés à être montés directement sur lesdites faces latérales de chaque secteur d'anneau (i.e. latéralement au-dessus de la face radialement interne de chaque secteur), en étant collés ou bien appliqués sur chaque secteur d'anneau lors du montage dans l'ensemble monté.

Selon un mode de réalisation de l'invention, ledit volume interne est creux (i.e. entièrement ou partiellement vide). Il en résulte une réduction sensible de la masse du dispositif de roulage à plat selon l'invention.

Selon un autre mode de réalisation de l'invention, ledit volume interne est rempli au moins partiellement d'un matériau alvéolaire, tel qu'une mousse de polyuréthanne de densité réduite.

Selon une autre caractéristique de l'invention, ladite paroi de chaque secteur d'anneau présente une face radialement externe recouverte d'un revêtement à base de caoutchouc destiné à soutenir ladite enveloppe en roulage à plat.

Avantageusement, ladite paroi de chaque secteur d'anneau peut présenter une section axiale de forme globalement rectangulaire ou trapézoïdale.

Selon un exemple de réalisation de l'invention, ladite paroi est à base d'un matériau composite, comprenant une matrice à base d'une résine (époxyde par exemple) renforcée par une armature de fibres, telles que des fibres de verre ou de carbone.

Selon une variante de réalisation de l'invention, ladite paroi est avantageusement métallique, de préférence à base d'aluminium ou de titane.

On notera que l'utilisation d'aluminium ou de titane ou bien d'un tel matériau composite pour ladite paroi permet d'abaisser encore la masse des dispositifs de roulage à plat selon l'invention. Selon l'invention, au moins une partie de ladite paroi de secteur d'anneau et lesdites cales peuvent présenter chacune une section axiale sensiblement en forme de trapèze dont les bases sont formées par les faces radialement interne et externe de ladite paroi et desdites cales, respectivement, de sorte que lesdites cales épousent lesdites faces latérales de ladite paroi. Dans ce cas, lesdites cales de type « courroie trapézoïdale » ne sont pas collées sur lesdits secteurs d'anneau, mais appliquées sur ceux-ci lors du montage.

D'une manière avantageuse, les cales peuvent être constituées de deux bourrelets annulaires qui sont chacun d'un seul tenant et sont renforcés par des éléments de renforcement avantageusement en textile, par exemple en aramide, et qui sont appliqués lors du montage sur lesdits secteurs d'anneau sans être collés sur ces derniers.

Selon un premier mode de réalisation de l'invention, ledit dispositif de roulage à plat peut comprendre en outre une semelle annulaire, par exemple constituée du même matériau que ladite paroi ou d'un autre matériau rigide, qui est destinée à être calée (i.e. ancrée) sur ladite jante radialement en dessous desdits moyens de blocage et adaptée pour recevoir ledit anneau par l'intermédiaire de ladite face radialement interne de ce dernier, en vue de répartir la charge supportée en roulage à plat par ladite face radialement externe et par lesdites faces latérales sur le fond de jante.

Ladite semelle est avantageusement divisée en secteurs respectivement solidarisés avec lesdits secteurs d'anneau, par exemple par collage.

Selon une variante avantageuse de réalisation de ce premier mode, chaque secteur d'anneau se termine radialement à l'intérieur par une embase formée par ladite paroi qui est destinée à être calée (i.e. ancrée) sur ladite jante radialement en dessous desdits moyens de blocage (cette embase remplit en fait la fonction précitée de ladite semelle).

Avantageusement, ladite semelle ou ladite embase peuvent présenter en section axiale une forme de trapèze dont les bases sont constituées par des faces radialement interne et externe de ladite semelle ou de ladite paroi de secteur d'anneau, respectivement, au moins un côté dudit trapèze reliant les bases entre elles étant adapté pour coopérer avec une paroi de ladite jante en contre-dépouille. A titre encore plus avantageux, ladite semelle ou ladite embase présentent en section axiale une forme de trapèze isocèle dont les deux côtés non parallèles sont respectivement adaptés pour coopérer avec deux parois latérales en contre-dépouille d'un creux circonférentiel de la jante.

Selon un second mode de réalisation de l'invention, chaque secteur d'anneau peut être adapté pour être ancré dans une gorge formée entre deux desdits blocs de ladite jante par l'intermédiaire d'une patte d'ancrage en arc de cercle prolongeant radialement vers l'intérieur ladite face radialement interne de ladite paroi. Avantageusement, ladite patte d'ancrage, vue en section axiale peut s'étendre à partir d'un bord latéral de ladite face radialement interne radialement vers l'intérieur puis à angle droit vers l'autre bord latéral.

Un ensemble monté selon l'invention comprend une jante de roue à plusieurs blocs, une enveloppe de pneumatique comportant des talons respectivement montés contre des rebords axialement interne et externe de ladite jante, et un dispositif de roulage à plat qui est monté autour de ladite jante entre lesdits rebords et qui est tel que défini précédemment, lesdits moyens de blocage desdits talons contre lesdits rebords reliant lesdits secteurs d'anneau auxdits talons et permettant d'assurer en permanence la motricité de l'ensemble monté par le contact talons/ rebords de jante.

Dans la présente description, les expressions « axialement interne » et « axialement externe » se réfèrent respectivement aux côtés de la jante de roue qui sont destinés à être tournés vers l'intérieur et vers l'extérieur du véhicule automobile, suite au montage sur un véhicule d'un ensemble monté comportant cette jante.

Selon une autre caractéristique de l'invention, lesdites cales annulaires, selon qu'elles sont divisées en secteurs ou d'un seul tenant, sont respectivement collées ou appliquées sur lesdites faces latérales de ladite paroi de chaque secteur d'anneau et contre lesdits talons, de sorte que lesdits secteurs d'anneau, ladite jante et ladite enveloppe soient toujours solidaires en rotation du fait du contact par frottement sur lesdits rebords de jante, la rotation du dispositif de roulage à plat et de l'enveloppe étant évitée.

On notera que ces moyens de blocage des talons permettent de conférer une motricité satisfaisante à l'ensemble monté en roulage à plat et également à pression faible sur divers types de sols plus ou moins meubles et/ou accidentés, allant de sols routiers à des sols sablonneux.

Selon une autre caractéristique de l'invention, lesdits secteurs d'anneau sont avantageusement montés indépendamment les uns des autres autour de ladite jante.

On notera que cette indépendance des secteurs d'anneau est rendue possible par l'ancrage de ladite semelle, de ladite embase ou de ladite patte du dispositif de roulage à plat entre les deux parties de ladite jante, ou bien par l'utilisation desdites cales de blocage des talons présentant une structure d'un seul tenant et renforcée, et qu'elle permet de s'affranchir d'une connectique rigide d'assemblage et de serrage entre les extrémités en vis-à-vis des secteurs de l'anneau, par exemple de type vis-écrou. En effet, l'expérience a montré que ces connectiques rigides peuvent être l'élément fragile des dispositifs de roulage à plat (phénomènes de fatigue par exemple).

Conformément au premier mode précité de réalisation de l'invention, ledit dispositif comporte une semelle annulaire qui est divisée en secteurs avec lesquels sont solidarisés lesdits secteurs d'anneau (par exemple par collage) et qui est montée en butée dans un creux circonférentiel à fond plat que comporte ladite jante. Cette dernière peut avantageusement comporter deux sièges de jante axialement interne et externe sur lesquels sont montés lesdits talons, qui se terminent par lesdits rebords et se prolongent radialement vers l'intérieur par des parois latérales axialement interne et externe délimitant ledit creux de jante, l'une au moins desdites parois latérales formant une contre-dépouille prévue pour coopérer avec un côté de ladite semelle.

Selon ce premier mode, lesdits moyens de blocage des talons comprenant au moins une paire desdites cales annulaires sont avantageusement positionnées radialement au-dessus de ladite semelle, contre lesdits secteurs d'anneau et les talons.

Conformément au second mode précité de réalisation de l'invention, chaque secteur d'anneau est ancré par ladite patte dont il est pourvu dans au moins une gorge circonférentielle formée entre deux desdits blocs de ladite jante qui comportent respectivement lesdits rebords axialement interne et externe, ladite gorge étant délimitée par au moins un bord latéral présentant une rainure circonférentielle de sorte à présenter une section axiale en forme de « L » ou de « T » inversé. Avantageusement, ladite gorge est adjacente audit rebord de jante axialement externe.

Selon ce second mode, lesdits moyens de blocage des talons comprenant au moins une paire desdites cales annulaires sont avantageusement positionnées radialement légèrement au-dessus de ladite jante, contre lesdits secteurs d'anneau et les talons.

Selon l'invention, ledit ensemble monté est tel que ladite jante présente un fond sensiblement plat en section axiale (i.e. une base de jante plane), et en ce que lesdits moyens de blocage comportent au moins une paire de cales annulaires qui sont à base de caoutchouc renforcé par des éléments de renforcement et qui sont chacune d'un seul tenant, lesdites cales et une partie radialement interne de ladite paroi de secteur d'anneau présentant chacune une section axiale en forme de trapèze dont les bases sont formées par les faces radialement interne et externe de ladite paroi et desdites cales, respectivement, de telle sorte que lesdites cales épousent lesdites faces latérales de ladite paroi en étant montées contre les talons et maintiennent lesdits secteurs d'anneau autour de ladite jante.

Avantageusement, ladite jante est à base d'aluminium, de titane ou d'un matériau composite et ladite jante pourrait être exclusivement constituée de titane (y compris les boulons de fixation des différentes parties de la jante).

On notera que l'utilisation d'aluminium, de titane ou d'un composite pour ladite jante permet d'abaisser encore la masse des ensembles montés et donc des véhicules qui en sont équipés.

D'autres caractéristiques, avantages et détails de la présente invention ressortiront à la lecture de la description suivante de plusieurs exemples de réalisation de l'invention, donnés à titre illustratif et non limitatif, ladite description étant réalisée en référence avec les dessins joints, parmi lesquels :
La figure 1 est une vue en demi-coupe axiale d'un ensemble monté incorporant un dispositif de roulage à plat selon un premier mode de réalisation de l'invention,
La figure 2 est vue éclatée en demi-coupe axiale d'un ensemble monté selon une première variante de la figure 1,
La figure 3 est une vue en demi-coupe axiale d'un ensemble monté selon une seconde variante de la figure 1,
La figure 4 est une vue en demi-coupe axiale d'un ensemble monté selon une variante de la figure 3,
La figure 5 est une vue en demi-coupe axiale d'un ensemble monté selon une variante de la figure 4,

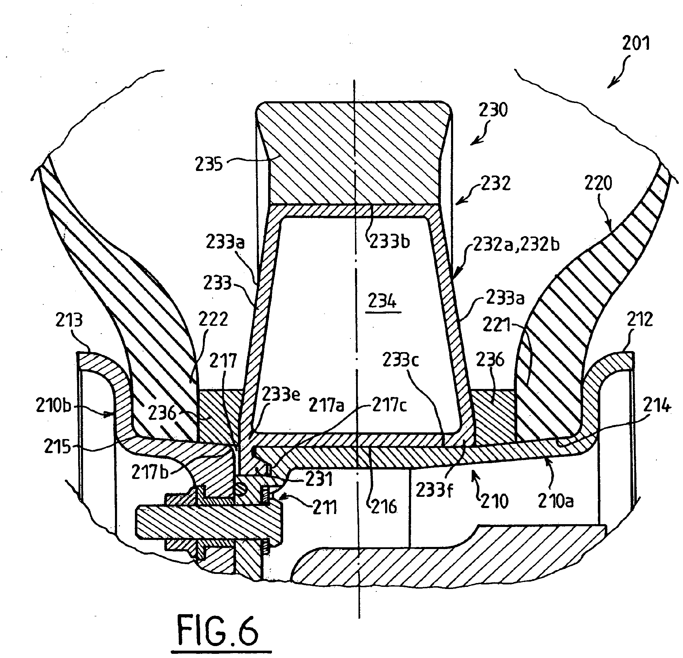

La figure 6 est une vue de détail en demi-coupe axiale d'un ensemble monté incorporant un dispositif de roulage à plat selon un second mode de réalisation de l'invention, et

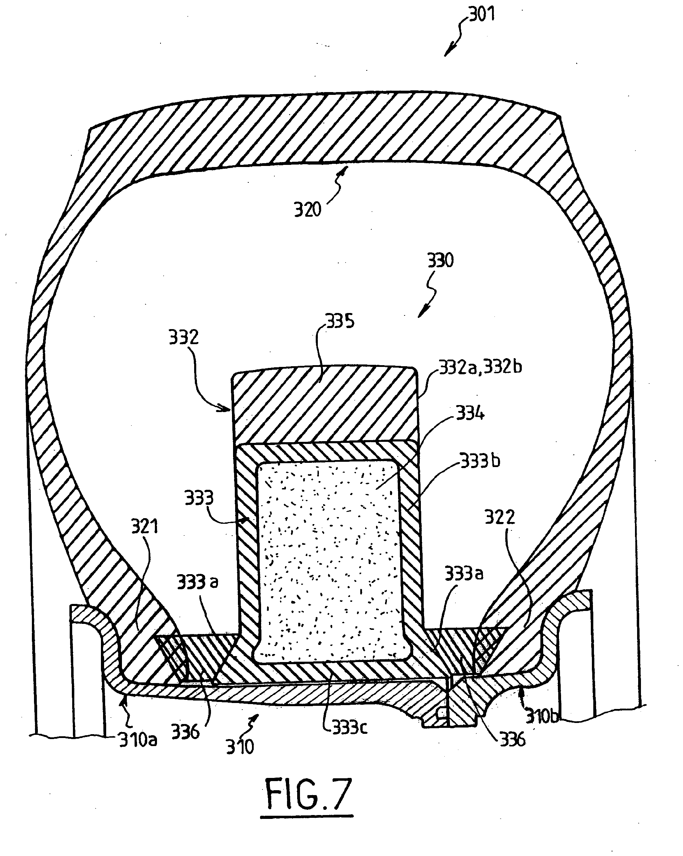

La figure 7 est une vue en demi-coupe axiale d'un ensemble monté incorporant un dispositif de roulage à plat selon un troisième mode de réalisation de l'invention.

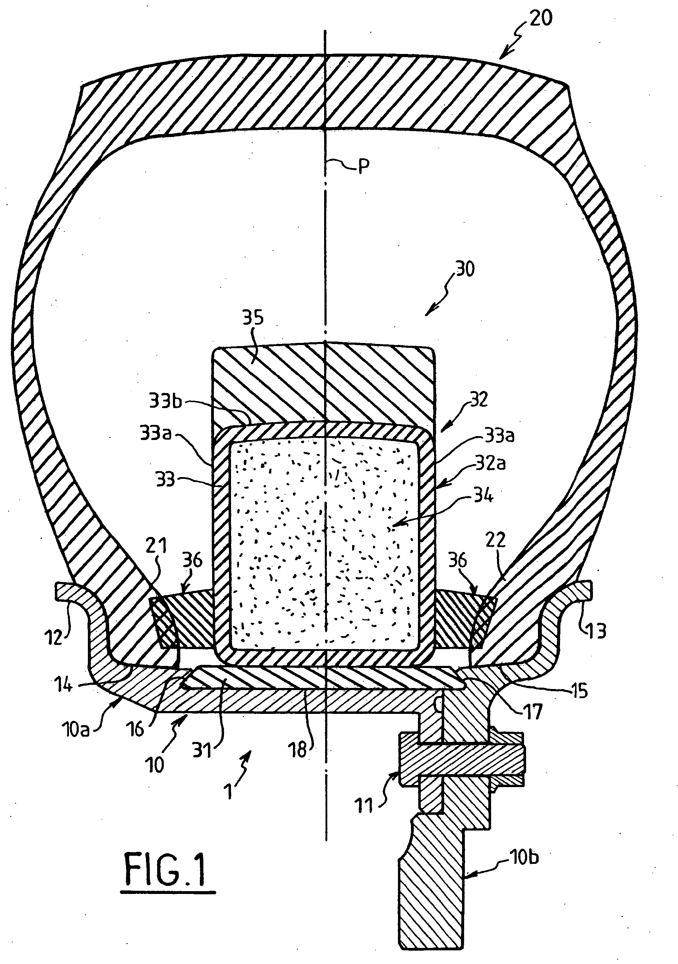

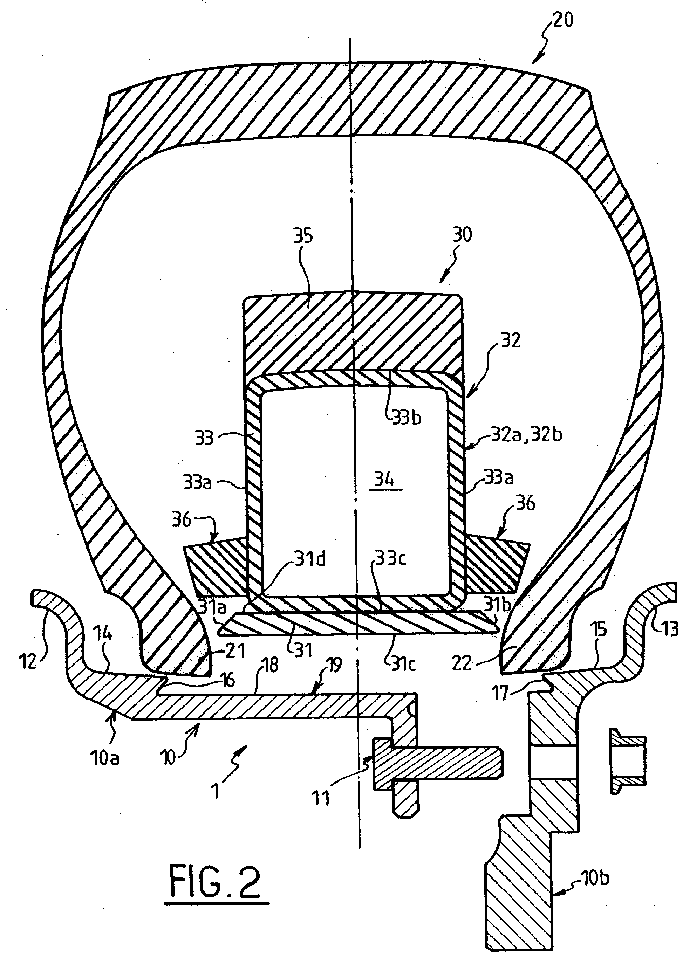

L'ensemble monté 1 selon le premier mode de réalisation de l'invention qui est illustré aux figures 1 et 2 comprend une jante de roue 10 à deux blocs 10a et 10b solidarisés l'un avec l'autre par des moyens de fixation 11 de type boulon.

Les deux blocs 10a et 10b comportent respectivement des rebords axialement interne et externe 12 et 13 délimitant respectivement deux sièges de jante 14 et 15 s'étendant axialement à partir des rebords 12 et 13, une enveloppe de pneumatique 20 dont les talons 21 et 22 sont montés en appui sur les sièges 14 et 15 contre les rebords 12 et 13, et un dispositif de roulage à plat 30 monté autour de la jante 10 à l'intérieur de l'enveloppe 20 et destiné à soutenir celle-ci suite à une chute de pression de gonflage à l'intérieur de l'ensemble monté 1.

Les sièges de jante 14 et 15 se prolongent radialement vers l'intérieur par des parois latérales axialement interne et externe 16 et 17 reliées par un fond 18 et délimitant un creux de jante 19 circonférentiel qui est adapté pour recevoir en butée une partie radialement interne du dispositif constituée d'une semelle annulaire 31.

A cet effet, les parois latérales 16 et 17 du creux 19 forment des contre-dépouilles qui sont symétriques par rapport au plan circonférentiel médian P de l'enveloppe 20 et qui sont respectivement prévues pour coopérer avec les deux côtés 31a, 31b de la semelle 31, de manière à s'opposer à la sortie du creux de jante 19 de la semelle 31 et donc du dispositif 30. Ainsi, la paroi latérale interne 16 est inclinée axialement et radialement vers l'intérieur, alors que la paroi latérale externe 17 est inclinée axialement vers l'extérieur et radialement vers l'intérieur.

Dans cet exemple de réalisation, la semelle 31 présente en section axiale une forme de trapèze isocèle dont les deux côtés 31a, 31b non parallèles sont respectivement adaptés pour venir se loger contre les parois latérales 16, 17 du creux 19, dont la grande base 31c est adaptée pour venir en butée sur le fond 18 du creux 19 et dont la petite base 31d est adaptée pour supporter un anneau de soutien 32 du dispositif 30 qui est destiné à soutenir l'enveloppe 20 en roulage à plat.

L'anneau de soutien 32 est divisé en au moins deux secteurs 32a, 32b indépendants en forme d'arc de cercle, et chaque secteur 32a, 32b comporte une paroi rigide 33 délimitant un volume interne 34 qui est rempli d'un matériau alvéolaire à la figure 1, tel qu'une mousse de polyuréthanne de densité réduite, et qui est vide dans la variante de la figure 2, cette paroi 33 définissant les faces latérales 33a de chaque secteur 32a, 32b.

La paroi 33 de chaque secteur 32a, 32b présente une face radialement externe 33b qui est recouverte sur une hauteur radiale déterminée d'un revêtement 35 à base de caoutchouc destiné à constituer l'interface anneau 32/ enveloppe 20 en roulage à plat, et une face radialement interne 33c qui est destinée à être montée d'une manière axialement centrée sur la semelle 31.

Dans l'exemple des figures 1 et 2, la paroi 33 de chaque secteur 32a, 32b présente une section axiale de forme sensiblement rectangulaire, les faces latérales 33a de la paroi 33 étant parallèles et se prolongeant en restant parallèles sur la hauteur radiale du revêtement 35.

La paroi 33 peut être métallique, de préférence à base d'aluminium ou de titane, ou bien à base d'un composite, comprenant une matrice de résine (par exemple époxyde) renforcée par une armature de fibres de verre ou de carbone.

La semelle 31 est constituée de secteurs qui sont respectivement solidaires desdits secteurs d'anneau 32a, 32b, par exemple par collage.

Le dispositif de roulage à plat 30 comprend en outre des moyens de blocage 36 des talons 21, 22 comportant une paire de cales annulaires qui sont constituées de bourrelets souples à base de caoutchouc, tel que du caoutchouc naturel, et qui sont respectivement destinées à être collées ou appliquées lors du montage (selon que ces cales 36 sont divisées en secteurs ou d'un seul tenant, étant à base de caoutchouc renforcé dans ce dernier cas) contre les faces latérales 33a des secteurs 32a, 32b et contre les talons en regard 21, 22, de telle sorte que les secteurs d'anneau 32a, 32b, la jante 10 et l'enveloppe 20 demeurent solidaires en rotation en roulage à plat.

Les cales 36 sont montées à distance de la face radialement interne 33c de chaque secteur 32a, 32b, de manière qu'elles se trouvent radialement au-dessus de la semelle 31 et des sièges de jante 14, 15 dans leur position de montage contre l'anneau 32 et les talons 21, 22.

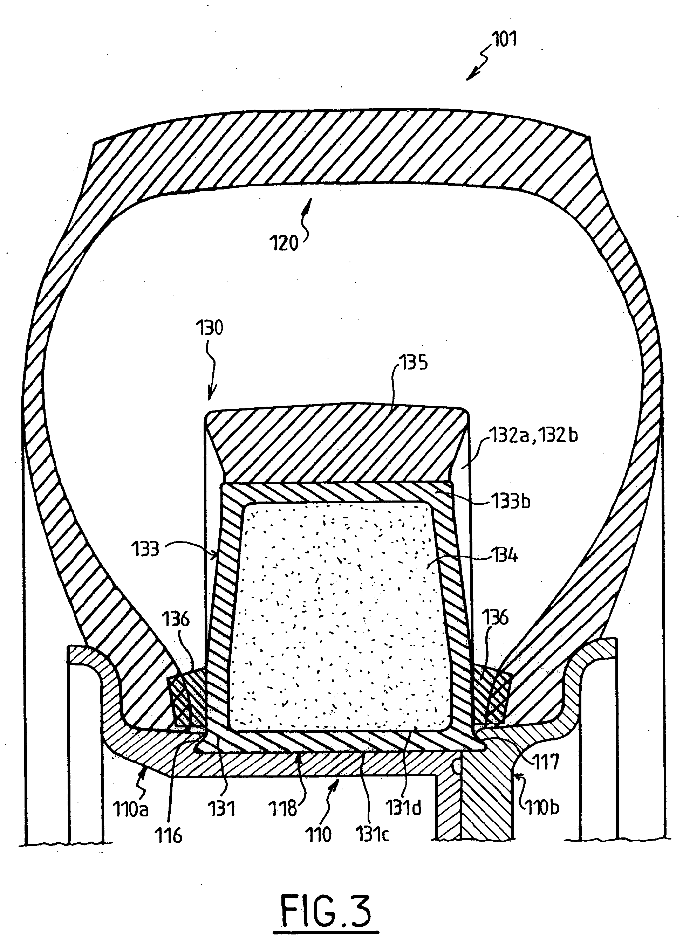

L'ensemble monté 101 illustré à la figure 3 correspond à une seconde variante dudit premier mode de réalisation. Il se différencie essentiellement de l'ensemble monté 1 décrit ci-dessus en ce que, d'une part, il comporte une embase 131 faisant partie intégrante de chaque secteur d'anneau 132a, 132b en formant la face radialement interne de celui-ci (cette embase 131 présentant dans cet exemple une forme de trapèze isocèle analogue à celle de la semelle 31 de la figure 1) et, d'autre part, en ce que la largeur axiale de chaque secteur d'anneau 132a, 132b est constante à partir de l'embase 131 sur une hauteur radiale déterminée prévue pour recevoir les cales 136, puis diminue radialement vers l'extérieur jusqu'à la face radialement externe 133b de la paroi rigide 133 (la largeur axiale du revêtement 135 croissant à partir de cette face 133b).

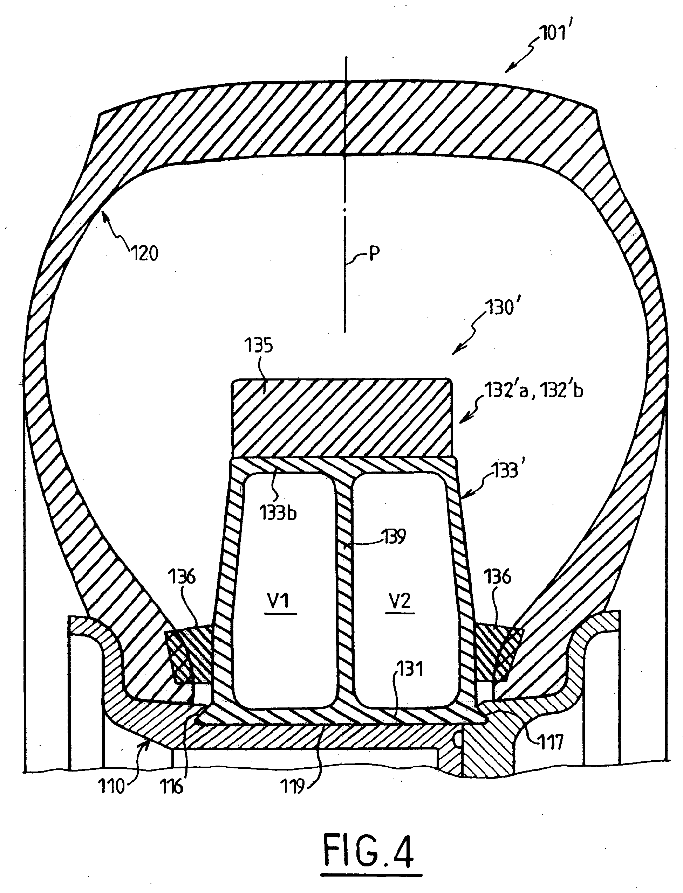

L'ensemble monté 101' illustré à la figure 4 correspond à une première variante de celui de la figure 3, et il s'en différencie essentiellement en ce que la paroi rigide 133' de chaque secteur d'anneau 132'a, 132'b qu'il inclut comporte une cloison médiane 139 en arc de couronne. La cloison 139 s'étend dans la direction circonférentielle, de l'embase 131 à la face radialement externe 133b de la paroi 133'. Cette cloison 139 délimite deux volumes internes V1 et V2 identiques dans cette direction circonférentielle, et elle est prévue pour être centrée sur le plan circonférentiel médian P de l'ensemble monté 101' lors du montage du dispositif de roulage à plat 130' sur la jante 110 et contre l'enveloppe 120.

On notera que les volumes internes V1 et V2 de chaque secteur d'anneau 132'a, 132'b pourraient être différents l'un de l'autre, la cloison 139 n'étant alors pas centrée sur ledit plan médian P.

Comme pour l'ensemble monté 1 de la figure 3, chaque secteur d'anneau 132'a, 132'b comporte une embase 131 en forme de trapèze isocèle qui est adaptée pour être ancrée dans le creux de jante 119 via les parois latérales 116 et 117 en contre-dépouille du creux 119.

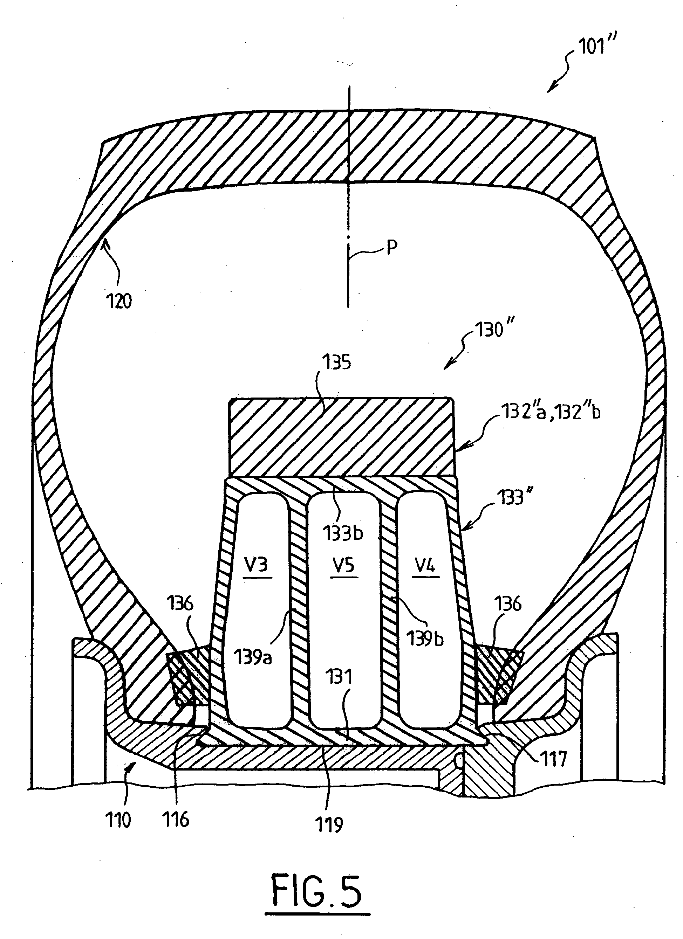

L'ensemble monté 101" illustré à la figure 5 correspond à une variante de celui de la figure 4, et il s'en différencie uniquement en ce que la paroi rigide 133" de chaque secteur d'anneau 132"a, 132"b qu'il inclut comporte deux cloisons 139a et 139b identiques en arc de couronne. Ces cloisons 139a, 139b s'étendent dans la direction circonférentielle, de l'embase 131 à la face radialement externe 133b de la paroi 133", et elles délimitent deux volumes internes latéraux V3 et V4 symétriques l'un de l'autre par rapport à un volume interne médian V5 destiné à être centré sur le plan circonférentiel médian P de l'ensemble monté 101".

Comme précédemment, on notera que les volumes internes V3 et V4 pourraient être différents l'un de l'autre, n'étant alors pas symétriques par rapport au volume médian V5.

On notera que ces cloisons 139, 139a, 139b permettent de conférer aux anneaux 132'a, 132'b et 132"a, 132"b une résistance à la compression améliorée en roulage à plat ou à pression réduite.

L'ensemble monté 201 selon le second mode de réalisation de l'invention qui est illustré à la figure 4 comprend également :
- une jante de roue 210 comportant deux blocs 210a et 210b solidarisés l'un avec l'autre par des moyens de fixation 211 de type boulon, les blocs 210a, 210b comportant respectivement des rebords axialement interne et externe 212, 213 délimitant respectivement deux sièges de jante 214, 215 s'étendant axialement à partir des rebords 212, 213,
- une enveloppe de pneumatique 220 dont les talons 221, 222 sont montés en appui sur les sièges 214, 215 contre les rebords 212, 213, et
- un dispositif de roulage à plat 230 monté autour de la jante 210 à l'intérieur de l'enveloppe 220 et destiné à soutenir celle-ci suite à une chute de pression de gonflage à l'intérieur de l'ensemble monté 201.

A la différence du premier mode précité, la jante 210 ne comporte pas de creux circonférentiel destiné à recevoir une semelle, mais un fond de jante 216 sensiblement plat pourvu d'une gorge circonférentielle 217 adjacente au rebord de jante externe 213. La gorge 217 est destinée à recevoir une patte d'ancrage 231 d'un anneau de soutien 232 du dispositif 230, et elle est formée entre les deux blocs de jante 210a, 210b en étant délimitée par deux bords latéraux 217a, 217b dont l'un présente une rainure circonférentielle 217c, de sorte à conférer à la gorge 217 une section axiale en forme de « L ».

Comme on peut le voir à la figure 4, le bord axialement externe 217b de la gorge 217 est formé par la face interne du bloc de jante 210b comportant le rebord externe 213, et ce bord 217b s'étend dans la direction radiale. Quant au bord axialement interne 217a de la gorge 217, il présente à partir du fond de jante 216 de l'autre bloc 210a un premier tronçon circonférentiel dirigé radialement vers l'intérieur, se prolongeant axialement et radialement vers l'intérieur par la rainure 217c.

Comme pour le premier mode précité, l'anneau de soutien 232 est divisé en au moins deux secteurs 232a, 232b indépendants en forme d'arc de cercle, et chaque secteur 232a, 232b comporte une paroi rigide 233 qui délimite un volume interne 234 et qui définit les faces latérales 233a du secteur 232a, 232b et ce volume interne 234 est avantageusement vide mais peut dans certains cas être rempli de mousse de densité réduite.

La paroi 233 de chaque secteur 232a, 232b présente une face radialement externe 233b qui est recouverte sur une hauteur radiale déterminée d'un revêtement 235 à base de caoutchouc destiné à constituer l'interface anneau 232 / enveloppe 220 en roulage à plat, et une face radialement interne 233c destinée à être montée sur le fond de jante 216.

Dans ce mode de réalisation, la paroi 233 de chaque secteur 232a, 232b présente une section axiale sensiblement en forme de trapèze isocèle, dont la grande base et la petite base sont respectivement constituées par les faces radialement interne 233c et externes 233b.

La patte d'ancrage 231 de chaque secteur d'anneau 232a, 232b est en forme d'arc de cercle, et elle prolonge radialement vers l'intérieur la face radialement interne 233c du secteur 232a, 232b en étant adaptée pour être montée en butée dans la gorge 217, en laissant un jeu axial entre les bords axialement interne 217a et externe 217b de la gorge 217 et cette patte 231. Cette dernière, vue en section axiale, s'étend radialement vers l'intérieur à partir d'un bord latéral 233e de la face radialement interne 233c de chaque secteur 232a, 232b, puis à angle droit vers l'autre bord latéral 233f de cette face interne 233c.

Cette paroi 233 peut être constituée des mêmes matériaux métalliques ou composites que ceux cités en référence audit premier mode.

Le dispositif de roulage à plat 230 comprend en outre des moyens de blocage 236 des talons 221, 222 comportant une paire de cales annulaires analogues à celles dudit premier mode, ces cales 236 étant également destinées à être collées ou appliquées sur les faces latérales 233a des secteurs 232a, 232b et contre les talons en regard 221, 222, de telle sorte que les secteurs d'anneau 232a, 232b, la jante 210 et l'enveloppe 220 demeurent solidaires en rotation.

L'ensemble monté 301 selon le troisième mode de réalisation illustré à la figure 5 se différencie essentiellement des ensembles montés 1, 101, 201 décrits ci-dessus par les points suivants.

En premier lieu, la jante 310 présente un fond de jante sensiblement plat.

En second lieu, chaque secteur d'anneau 332a, 332b présente une zone radialement interne 333a de section axiale en forme de trapèze isocèle dont les côtés non parallèles sont dirigés l'un vers l'autre radialement vers l'extérieur de sorte à constituer deux zones latérales d'application pour deux cales annulaires 336 de blocage des talons 321, 322. Chaque secteur d'anneau présente, radialement vers l'extérieur à partir de cette zone interne 333a, une zone radialement externe 333b de section axiale rectangulaire (i.e. de largeur constante).

De plus, chaque cale 336 est constituée d'un bourrelet d'un seul tenant à base de caoutchouc qui présente une forme de type « courroie trapézoïdale », adaptée pour être appliquée lors du montage (i.e. non collée) par l'un de ses côtés non parallèles sur un côté de cette zone radialement interne 333a. Chaque cale 336 est renforcée par des éléments de renforcement textiles, par exemple en aramide.

On notera que ces cales trapézoïdales 336 renforcées et d'un seul tenant sont destinées à maintenir solidaires entre eux les secteurs d'anneau 332a, 332b autour de la jante 310.

## Revendications

1. Dispositif de roulage à plat (330) destiné à équiper un ensemble monté (301) sans chambre à air pour véhicule automobile, comprenant une jante de roue (310) à plusieurs blocs (310a et 310b) et présentant un fond de jante sensiblement plat en section axiale, ledit ensemble comportant en outre une enveloppe de pneumatique (320) comportant des talons (321 et 322) montés contre des rebords (312 et 313) de ladite jante, ledit dispositif comprenant :
- un anneau de soutien (332) qui est destiné à être monté autour de ladite jante en vue de soutenir ladite enveloppe suite à une chute de pression de gonflage à l'intérieur dudit ensemble monté et qui est divisé en au moins deux secteurs d'anneau (332a et 332b), chaque secteur d'anneau étant indépendant des autres secteurs d'anneau et comportant une paroi rigide (333) qui délimite au moins un volume interne (334) et qui définit les faces latérales (333a) dudit secteur, et
- des moyens de blocage (336) desdits talons contre lesdits rebords qui sont destinés à relier lesdits secteurs d'anneau auxdits talons,
**caractérisé en ce que** lesdits moyens de blocage comportent au moins une paire de cales annulaires qui sont à base de caoutchouc renforcé par des éléments de renforcement et qui sont chacune d'un seul tenant, lesdites cales et une partie radialement interne de ladite paroi de secteur d'anneau présentant chacune une section axiale en forme de trapèze dont les bases sont formées par les faces radialement interne et externe de ladite paroi et desdites cales, respectivement, de telle sorte que lesdites cales épousent lesdites faces latérales de ladite paroi en étant montées contre les talons et maintiennent lesdits secteurs d'anneau autour de ladite jante.

2. Dispositif (330) selon la revendication précédente, **caractérisé en ce que** ledit volume interne (334) est rempli au moins partiellement d'un matériau alvéolaire, telle qu'une mousse de polyuréthanne de densité réduite.

3. Dispositif (330) selon une des revendications précédentes, **caractérisé en ce que** ladite paroi (333) de chaque secteur d'anneau (332a et 332b) présente une face radialement externe qui est recouverte d'un revêtement (335) à base de caoutchouc destiné à soutenir ladite enveloppe (320) en roulage à plat.

4. Dispositif (330) selon une des revendications précédentes, **caractérisé en ce que** ladite paroi (333) de chaque secteur d'anneau (332a et 332b) présente une section axiale de forme globalement rectangulaire ou trapézoïdale.

5. Dispositif (330) selon une des revendications précédentes, **caractérisé en ce que** ladite paroi (333) est constituée d'un matériau métallique, tel qu'un matériau à base d'aluminium ou de titane.

6. Dispositif (330) selon une des revendications 1 à 4, **caractérisé en ce que** ladite paroi (333) est à base d'un matériau composite, tel qu'un résine époxyde renforcée par des fibres de verre ou de carbone.

7. Ensemble monté (301) sans chambre à air pour véhicule automobile, comprenant une jante de roue (310) à plusieurs blocs (310a et 310b) et présentant un fond de jante sensiblement plat en section axiale, ledit ensemble comportant en outre une enveloppe de pneumatique (20, 120, 220, 320) comportant des talons (321 et 322) respectivement montés contre des rebords axialement interne et externe (312 et 313) de ladite jante, et un dispositif de roulage à plat (330) monté autour de ladite jante entre lesdits rebords et comprenant :
- un anneau de soutien (332) qui est destiné à soutenir ladite enveloppe suite à une chute de pression de gonflage à l'intérieur dudit ensemble monté et qui est divisé en au moins deux secteurs d'anneau (332a et 332b) chacun en forme d'arc de cercle, chaque secteur d'anneau étant indépendant des autres secteurs d'anneau et comportant une paroi rigide (333) qui délimite au moins un volume interne (,334) et qui définit les faces latérales (333a) dudit secteur, et
- des moyens de blocage (336) desdits talons contre lesdits rebords qui relient lesdits secteurs d'anneau auxdits talons,
**caractérisé en ce que** lesdits moyens de blocage comportent au moins une paire de cales annulaires qui sont à base de caoutchouc renforcé par des éléments de renforcement et qui sont chacune d'un seul tenant, lesdites cales et une partie radialement interne de ladite paroi de secteur d'anneau présentant chacune une section axiale en forme de trapèze dont les bases sont formées par les faces radialement interne et externe de ladite paroi et desdites cales, respectivement, de telle sorte que lesdites cales épousent lesdites faces latérales de ladite paroi en étant montées contre les talons et maintiennent lesdits secteurs d'anneau autour de ladite jante.

8. Ensemble monté (301) selon la revendication précédente, **caractérisé en ce que** lesdits secteurs d'anneau (332a et 332b) sont montés indépendamment les uns des autres autour de ladite jante (310).

9. Ensemble monté (301) selon la revendication 7 ou 8, **caractérisé en ce que** ladite jante (310) est à base d'aluminium ou de titane.

10. Ensemble monté (301) selon la revendication précédente, **caractérisé en ce que** ladite jante (310) est exclusivement constituée de titane.

## Patentansprüche

1. Notlaufvorrichtung (330) zum Ausstatten einer montierten Einheit (301) ohne Schlauch für Kraftfahrzeuge, die eine Radfelge (310) mit mehreren Blöcken (310a und 310b) umfasst und einen im Axialschnitt im Wesentlichen flachen Felgenboden aufweist, wobei die Einheit ferner eine Reifenkarkasse (320) umfasst, die Wülste (321 und 322) umfasst, die an den Rändern (312 und 313) der Felge montiert sind, wobei die Vorrichtung Folgendes umfasst:
- einen Stützring (322), der dazu gedacht ist, um die Felge herum montiert zu sein, um die Karkasse infolge eines Reifendruckabfalls im Innern der montierten Einheit abzustützen, und der in mindestens zwei Ringsektoren (332a und 332b) unterteilt ist, wobei jeder Ringsektor von den anderen Ringsektoren unabhängig ist und eine starre Wand (333) umfasst, die mindestens ein internes Volumen (334) abgrenzt und welche die seitlichen Flächen (333a) des Sektors definiert, und
- Mittel (336) zum Blockieren der Wülste an den Rändern, die dazu gedacht sind, die Ringsektoren mit den Wülsten zu verbinden,
**dadurch gekennzeichnet, dass** die Blockierungsmittel mindestens ein Paar ringförmige Keile umfassen, die auf mit Verstärkungselementen verstärktem Kautschuk basieren und die jeweils einstückig sind, wobei die Keile und ein radial interner Teil der Ringsektorwand jeweils einen trapezförmigen axialen Querschnitt aufweisen, dessen Basen durch die radial internen und externen Flächen jeweils der Wand und der Keile gebildet sind, so dass sich die Keile an die seitlichen Flächen der Wand anpassen, indem sie an den Wülsten montiert sind und die Ringsektoren um die Felge herum festhalten.

2. Vorrichtung (330) nach dem vorhergehenden Anspruch, **dadurch gekennzeichnet, dass** das interne Volumen (334) mindestens teilweise mit Schaumstoff, wie etwa Polyurethanschaum niedriger Dichte, gefüllt ist.

3. Vorrichtung (330) nach einem der vorhergehenden Ansprüche, **dadurch gekennzeichnet, dass** die Wand (333) jedes Ringsektors (332a und 332b) eine radial externe Fläche aufweist, die mit einem Belag (335) auf Kautschukbasis überzogen ist, der dazu gedacht ist, die Karkasse (320) beim Notlauf abzustützen.

4. Vorrichtung (330) nach einem der vorhergehenden Ansprüche, **dadurch gekennzeichnet, dass** die Wand (333) jedes Ringsektors (332a und 332b) einen insgesamt rechteckigen oder trapezförmigen axialen Querschnitt aufweist.

5. Vorrichtung (330) nach einem der vorhergehenden Ansprüche, **dadurch gekennzeichnet, dass** die Wand (333) aus einem metallischen Material besteht, wie etwa aus einem Material auf Aluminium- oder Titanbasis.

6. Vorrichtung (330) nach einem der Ansprüche 1 bis 4, **dadurch gekennzeichnet, dass** die Wand (333) auf einem Verbundmaterial, wie etwa einem glas- oder kohlefaserverstärktem Epoxidharz, basiert.

7. Montierte Einheit (301) ohne Schlauch für Kraftfahrzeuge, die eine Radfelge (310) mit mehreren Blöcken (310a und 310b) umfasst und einen im Axialschnitt im Wesentlichen flachen Felgenboden aufweist, wobei die Einheit ferner eine Reifenkarkasse (20, 120, 220, 320) umfasst, die Wülste (321 und 322), die jeweils an axial internen und externen Rändern (312 und 313) der Felge montiert sind, und eine Notlaufvorrichtung (330), die um die Felge herum zwischen den Rändern montiert ist, umfasst, und umfassend:
- einen Stützring (322), der dazu gedacht ist, um die Karkasse infolge eines Reifendruckabfalls im Innern der montierten Einheit abzustützen, und der in mindestens zwei Ringsektoren (332a und 332b) unterteilt ist, wobei jeder Ringsektor von den anderen Ringsektoren unabhängig ist und eine starre Wand (333) umfasst, die mindestens ein internes Volumen (334) abgrenzt und welche die seitlichen Flächen (333a) des Sektors definiert, und
- Mittel (336) zum Blockieren der Wülste an den Rändern, welche die Ringsektoren mit den Wülsten verbinden,
**dadurch gekennzeichnet, dass** die Blockierungsmittel mindestens ein Paar ringförmige Keile umfassen, die auf mit Verstärkungselementen verstärktem Kautschuk basieren, und die jeweils einstückig sind, wobei die Keile und ein radial interner Teil der Ringsektorwand jeweils einen trapezförmigen axialen Querschnitt aufweisen, dessen Basen durch die radial internen und externen Flächen jeweils der Wand und der Keile gebildet sind, so dass sich die Keile an die seitlichen Flächen der Wand anpassen, indem sie an den Wülsten montiert sind und die Ringsektoren um die Felge herum festhalten.

8. Montierte Einheit (301) nach dem vorhergehenden Anspruch, **dadurch gekennzeichnet, dass** die Ringsektoren (332a und 332b) unabhängig voneinander um die Felge (310) herum montiert sind.

9. Montierte Einheit (301) nach Anspruch 7 oder 8, **dadurch gekennzeichnet, dass** die Felge (310) auf Aluminium oder Titan basiert.

10. Montierte Einheit (301) nach dem vorhergehenden Anspruch, **dadurch gekennzeichnet, dass** die Felge (310) ausschließlich aus Titan besteht.

## Claims

1. Flat-running device (330) designed to be fitted on a tubeless mounted assembly (301) for an automobile, comprising a multi-block (310a and 310b) wheel rim (310) and having a substantially flat rim base in axial section, said assembly also comprising a tyre casing (320) comprising beads (321 and 322) mounted against the edges (312 and 313) of said rim, said device comprising:
- a support ring (332) which is designed to be mounted around said rim in order to support said casing following a drop in inflating pressure inside said mounted assembly and which is divided into at least two ring sectors (332a and 332b), each ring sector being independent of the other ring sectors and comprising a rigid wall (333) which demarcates at least one internal volume (334) and which defines the side faces (333a) of said sector, and
- blocking means (336) of said beads against said edges which are designed to connect said ring sectors to said beads,
**characterised in that** said blocking means comprise at least one pair of annular shims which are made of rubber reinforced with reinforcing elements and which are each integral, said shims and a radially internal section of said ring sector wall each having an axial section in a trapezium form of which the bases are formed by the radially internal and external faces of said wall and said shims, respectively, so that said shims fit closely to said side faces of said wall by being mounted against the beads and holding said ring sectors around said rim.

2. Device (330) according to the preceding claim, **characterised in that** said internal volume (334) is at least partially filled with a foam material, such as a reduced density polyurethane foam.

3. Device (330) according to one of the preceding claims, **characterised in that** said wall (333) of each ring sector (332a and 332b) has a radially external face which is covered with a rubber-based coating (335) designed to support said flat-running tyre casing (320).

4. Device (330) according to one of the preceding claims, **characterised in that** said wall (333) of each ring sector (332a and 332b) has an axial section of globally rectangular or trapezoidal form.

5. Device (330) according to one of the preceding claims, **characterised in that** said wall (333) is formed of a metallic material, such as an aluminium- or titanium-based material.

6. Device (330) according to one of claims 1 to 4, **characterised in that** said wall (333) is made of a composite material, such as an epoxide resin reinforced by carbon or glass fibres.

7. Mounted tubeless assembly (301) for an automobile, comprising a multi-block (310a and 310b) wheel rim (310) and having a substantially flat rim base in axial section, said assembly also comprising a tyre casing (20, 120, 220, 320) comprising beads (321 and 322) mounted respectively against the axially internal and external edges (312 and 313) of said rim, and a flat-running device (330) mounted around said rim between said edges and comprising:
- a support ring (332) which is designed to support said casing following a drop in inflating pressure inside said mounted assembly and which is divided into at least two ring sectors (332a and 332b), each arcuate, each ring sector being independent of the other ring sectors and comprising a rigid wall (333) which demarcates at least one internal volume (,334) and which defines the side faces (333a) of said sector, and
- blocking means (336) of said beads against said edges which are designed to connect said ring sectors to said beads,
**characterised in that** said blocking means comprise at least one pair of annular shims which are made of rubber reinforced with reinforcing elements and which are each integral, said shims and a radially internal section of said ring sector wall each having an axial section in a trapezium form of which the bases are formed by the radially internal and external faces of said wall and said shims, respectively, so that said shims fit closely to said side faces of said wall by being mounted against the beads and holding said ring sectors around said rim.

8. Mounted assembly (301) according to the preceding claim, **characterised in that** said ring sectors (332a and 332b) are mounted independently of each other around said rim (310).

9. Mounted assembly (301) according to claim 7 or 8, **characterised in that** said rim (310) is aluminium- or titanium-based.

10. Mounted assembly (301) according to the preceding claim, **characterised in that** said rim (310) is exclusively formed of titanium.
